# EUROPEAN PATENT APPLICATION

(11) **EP 3 825 953 A1**
(43) Date of publication of application: **26.05.2021**
(21) Application number: 19020663.1
(22) Date of filing: 25.11.2019
(51) Int. Cl.: G06Q 50/30, G06Q 10/04, G06Q 30/08

(54) **A METHOD FOR COORDINATING COOPERATIVE MOBILITY IN URBAN TRANSPORT NETWORKS**

(71) Applicant: Efstathopoulos, Nikolaos, 106 78 Athens (GR)
(72) Inventor: Efstathopoulos, Nikolaos, 106 78 Athens (GR)

(57) **Abstract**

The present specification describes the building blocks of a method to coordinate mobility in urban transport networks with the use of time slots that can be traded between users ("Agents"). The method introduced has the following key characteristics:
1.Micro-networks are formed by Agents with similar spatiotemporal trip characteristics;
2.Time slots are assigned on a first come, first served basis;
3.These slots can then be traded through a market mechanism that involves Buyer-initiated or Seller-initiated auctions;
4.A distributed ledger is used for tracking the assignment of time slots between Agents; and
5.AI Agents that that are monitoring time-slot assignments and relevant results and can make interventions in order to maintain performance levels, both:
- Within micro-networks; as well as
- Between micro networks.

## Description

### Introduction

The present specification provides a description of the main building blocks of a method for decentralised coordination of mobility in urban transport networks, using time slots that can be traded between users ("Agents") .

### Principles

Main principles of the method described in the present specification include the following:
**1.Decentralised:** Management of the method is based in decentralised control;
**2.Scalable:** The method deployed will be efficient in transport networks of different forms, scales and level of complexity; and
**3.Equitable** The method is aiming to maximise the use of transport infrastructure by unlocking its hidden capacity and assign to Agents in an equitable manner.

### The concept of micro-networks

Urban transport networks include Agents that during their trips try to get access to the same resources at the same time, thus creating congestion and delays, particularly during morning and afternoon peak hours.

In fact, Agents are forming micro-networks every day, which might seem ad-hoc but in fact are more structured than we realise. People tend to more or less repeat the same actions every day and in that sense our commuting patterns can be to a large extent deterministic and predictable. Complexity in transport networks is emerging from small variations in individual daily routines. In a large urban agglomeration the interaction between Agents creates complex networks that are difficult to grasp, let alone manage. Furthermore the advent of Connected and Autonomous Vehicles ("CAV") will most probably further increase the level of complexity in urban networks, as a consequence of the interaction between Artificial Intelligence ("AI") and Human Agents in the same network, competing for access to the same infrastructure resources.

With the proposed method this network of Agents (that can be both human and AI ones) becomes a mobility cell (the "micro-network", which forms part of a greater network, in spatiotemporal terms).

### Method overview

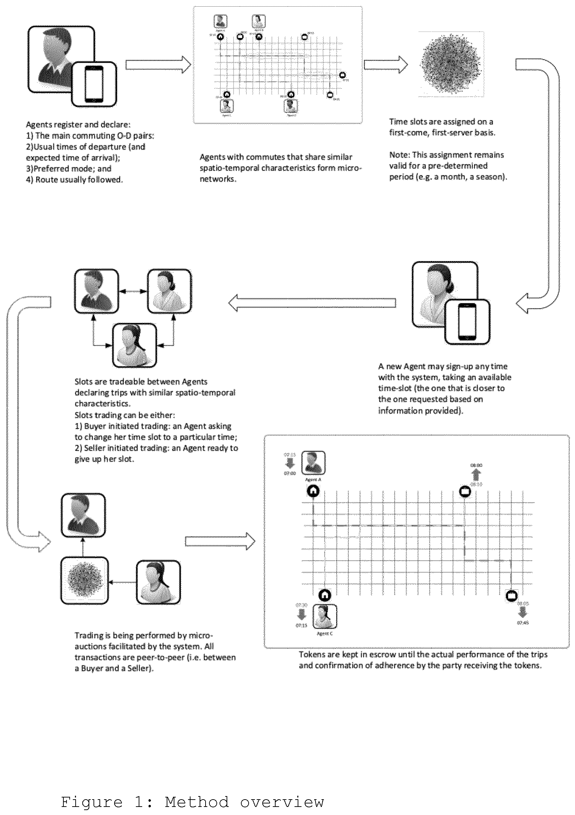

For a schematic overview of the method, please refer to Figure 1.

Key characteristics of the method are provided below:
1.Definitions of transferable asset and time slot:
   - **The transferable asset is**:the *priority ("time slot") that an Agent possesses to travel at a certain time during the day between a specific pair of origin and destination and for a specific mode within an urban transport network;*
   - **A time slot, for this particular method, is:** *a combination of the time that departure can take place from a specific origin and projected arrival time to a specific destination;*
2.Each Agent of the network is assigned with a time slot for her travel;
3.Time slots are initially assigned on a first-come, first-serve basis;
4.These time slots are tradeable;
   - Trading media are tokens;
   - Trading mechanism is through auctions between Agents that belong to the same micro-network;
5.A change to current (at the time) equilibrium can be either:
   - Buyer initiated; or
   - Seller initiated;
6. In the case that a change of slot is agreed between a Buyer and a Seller, the tokens are kept in escrow until the actual trips have been realised.

### How the micro-networks are being formed

Upon registration Agents provide information regarding:
1.Their main commuting nodes (for example):
   - Origin (e.g. Home);
   - Destination (e.g. Work);
   - Any major in between stops (e.g. School);
2.Times of departure;
3.Preferred mode; and
4.Route usually followed.

Once the above information is available, an algorithm will assign the Agent's to a group of Agents with trips that share the same spatiotemporal characteristics. This group is a micro-network that uses part of the transportation network (in terms of space and time).

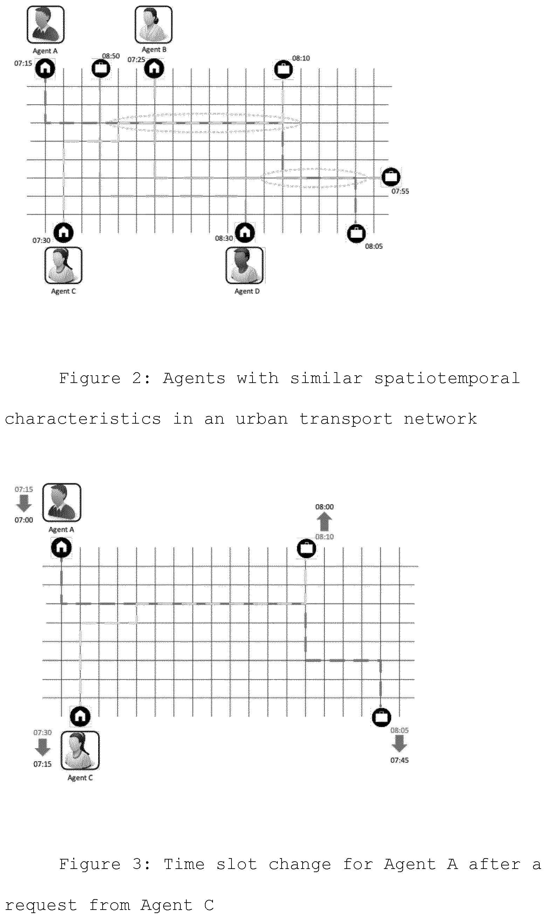

Figure 2 depicts a transportation network with commuters (Agents A to D) that travel through the network between 07:00 and 09:00 every morning. In this case Agents A, B, C are considered to belong to the same group in the sense that changes in the departure time, route and travel time of one of them could affect the travel time of the other.

### Note:

The maximum number of Agents in a micro-network depends on the available computational resources to solve the problem within a reasonable time duration that is practical for the proper operation of the method.

### Workflow

The workflow of the method includes the following key processes:
1. Trips pre-screening;
2.Trip engine;
3.Buyer initiated trading; and
4.Seller initiated trading.

The sections that follow provide more details on each key process mentioned above.

### Trips pre-screening

Agents are assigned to micro-networks based on a pre-screening algorithm. The algorithm takes into account the starting and end points of the trip and departure time.

### Trip engine

A slot assignment algorithm is at the core of the trip engine. This is an algorithm that:
1.Defines the timetable within a micro-network;
2.Assigns priority to Agents based on pre-defined criteria;
3.Determines whether Agents' trips are coinciding in both space and time;
4.Determines the degree of relevance between trips (based on the amount of time and infrastructure network length that the two trips share);
5.Resolves conflicts by calculating new departure times for Agents with lower priority (in pairs); and
6.Creates the final timetable for the micro-network.

### Buyer initiated trading

1.An Agent wishing to buy a slot ("Buyer") requests a slot change, by posting an offer (specifying the required slot range as well as the price which she would be willing to buy a slot). This change can be either:
   - A one-time change for the particular day/time; or
   - A permanent (for a pre-defined period) change of slots thereafter;
2.The method will identify Agents that are more relevant to the request and sort them by degree of relevance;
3.Then the offer will be posted to the Agent with the trip that has the higher degree of relevance with the one of the Buyer. This Agent may:
   - Accept the offer. In this case the two Agents are exchanging their priority (in terms of time of departure and arrival) in the trips' list of the micro-network;
   - Make a counter offer (i.e. increase the amount of tokens required to be paid by the Buyer for the Seller to accept the offer). In this case the Buyer has two options:
      * Accept the counter offer. Then the method proceeds as per what is mentioned above;
      * Decline the counter offer. In this case the method will proceed with the next Agent in the list of relevance;
   - Decline the offer. Then the method will proceed with the next Agent in the list of relevance.
4.If none of the Agents accepts the offer, the Buyer can make a second offer with higher amount of tokens and the method will perform the same process.

### Seller initiated trading

1.An Agent wishing to sell its current slot ("Seller") posts an offer (specifying the range in which she would willing to sell the slot). This change can be either:
   - A one-time change for the particular day/time; or
   - A permanent change of slots thereafter (for a pre-defined period);
2.The method will identify the Agents that are more relevant to the request;
   - Then the offer will be posted to all relevant Agents simultaneously;
   - The first Agent to accept the offer ("Buyer") will be assigned with the slot;
   - Potential Buyers have the following possible actions:
      * Accept the offer. In this case the two Agents are exchanging their places (in terms of time of departure and arrival) in the trips' list of the micro-network;
      * Make a counter offer (i.e. decrease the amount of tokens required to be paid by the Buyer to accept the offer). In this case the Seller has two options:
         * Accept the counter offer;
         * Decline the counter offer. In this case the method will proceed as the offer is not accepted (i.e. the method will still be waiting for a Buyer to accept the offer);
   - Decline the offer. In this case the method will proceed as the offer is not accepted (i.e. the method will still be waiting for a Buyer to accept the offer).
3.If none of the Agents accepts the offer, the Seller can make a second offer with lower amount of tokens and the method will perform the same process.

Figure 3 depicts an example of an exchange of time slot.

### Maintaining network efficiency over long time periods

Using the network in a more efficient manner over long periods requires optimisation in two levels:
1. The micro-network level; and
2.Between neighbouring (in terms of both space and time) micro-networks.

Both above will be performed through the deployment of AI Agents:
- within micro-networks; and
- between micro-networks.

### Within micro-networks

Over longer time periods, there will be sequences of time-slots that work better than others in the sense of producing better system-wide performances.

AI Agents ("Micro-network Managers") will be introduced that will perform the following functions:
1.Monitor the performance of the micro-network over time, identifying the sequences of Agent trips that produce the best overall results for the infrastructure utilization;
2.When the performance of the micro-network is below a certain threshold the Micro-network Manager will be able to introduce a change of slots by offering incentives to affected Agents.

### Notes:

1.The funding for the offering of these incentives will be provided through a share of the transaction fees that will be withheld in every transaction;
2.Micro-network Managers are Machine Learning ("ML") algorithms which:
   - Correlate particular Agent trip sequences to Key Performance Indicators ("KPI") for overall micro-network performances; and
   - Once the overall network performance is below a certain threshold, provide incentives to Agents in order to create Agent trip sequences that have better performances.

### Between micro-networks

Although the greater cooperative mobility concept is based on breaking down the problem of urban networks optimisation in many parallel smaller ones, the interaction between Agents of different micro-networks can be significant, therefore requiring a form of coordination between these micro-networks. For that purpose AI agents ("Network Arbitrators") are introduced that will perform the following functions:
1.Monitor the micro-networks' performance in relation to interaction of Agents of adjacent (in spatiotemporal terms) micro-networks;
2.Determine whether this interaction produces major delays to the micro-network;
3.Make interventions in the sequence of slots between micro-networks (for example by eliminating a time slot in one of the micro-networks) by offering incentives to Micro-network Managers. The latter will then pass these incentives to individual Agents through the mechanism described in the previous section.

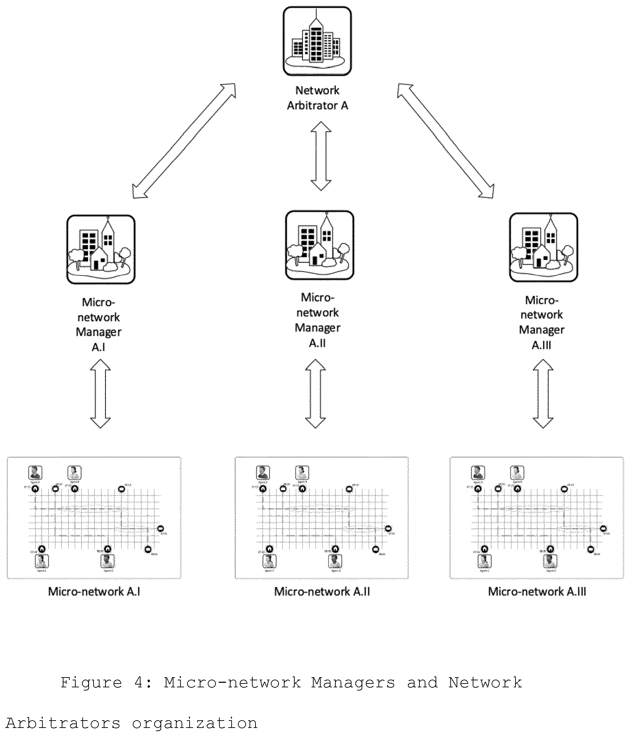

Figure 4 depicts how the Micro-network Managers and Network Arbitrators are organised in the same transport network.

### Notes:

1.The funding for the offering of these incentives will be provided through a share of the transaction fees that will be withheld in every transaction;
2.Network Arbitrators are ML algorithms which:
   - Calculate the level of interaction between Agents of neighbouring micro-networks;
   - Correlate the level of interaction between Agents of neighbouring micro-networks with KPI for overall micro-network performances; and
   - Once the overall network performance is below a certain threshold, provide incentives to Micro-network Managers in order to create Agent sequences that have better performances.

### Technology

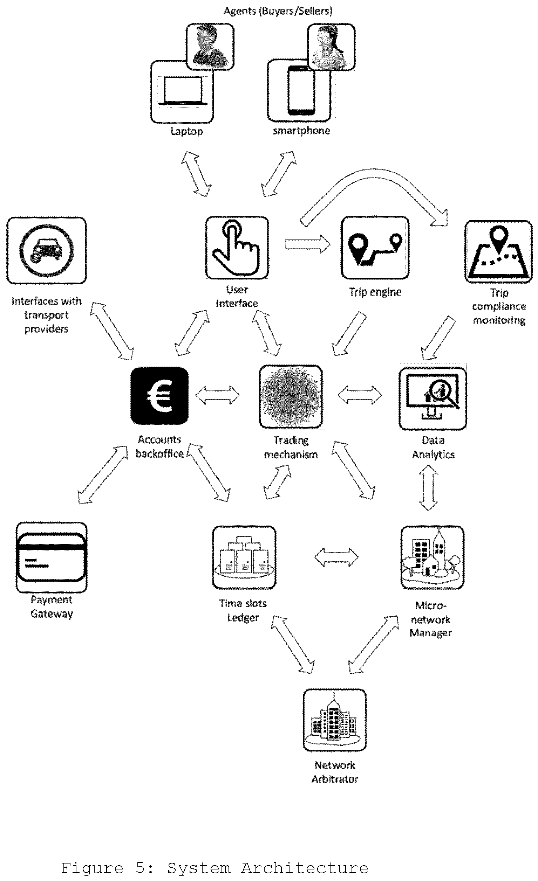

Figure 5 depicts the architecture and main building blocks of the system, which serves the method described herein.

The main system components include the following:
1.User interface: it is the component of the system that concerns interaction with Agents (input/output, visualisation, notifications etc.);
2.Trip engine: includes the trip analysis, conflict resolution between relevant trips and slot assignment;
3.Trip compliance monitoring: It compares the planned trip with the actual trip characteristics for a number of purposes including: compliance, building intelligence on the network operations;
4.Data Analytics: Machine learning algorithms and advanced analytics will be used to get more insights about the operation of the system. This knowledge will be used for its optimisation;
5.Trading mechanism: includes the algorithms used for Buyer and Seller initiated trade of slots;
6.Accounts Back office: The back office maintains the basic account data for each Agent (personal information, tokens balance, trips, transactions etc.);
7.Time slots ledger: includes a ledger of all time slots assignments across all micro-networks;
8.Micro-network Manager: Monitors the network performance and intervene by offering incentives to Agents, when required;
9.Network Arbitrator: Monitors the performance between neighbouring micro-networks and intervene by offering incentives to Micro-network Managers, when required;
10.External Interfaces, including the following:
   - Interfaces with transport providers; and
   - Payment gateway.

## Claims

1. A method for creating micro-networks within an urban transport network and assigning Agents to them based on spatiotemporal characteristics of their trips;

2. A method for initial assignment and Buyer-initiated or Seller-initiated trading between time slots holders within micro-networks for trips in an urban transport network;

3. A method for maintaining the urban transport network efficiency over long periods by introducing AI agents that that are monitoring time-slot sequences and associated network performance and can make interventions to restore performance levels (when the latter is below a certain threshold), both:
- Within micro-networks; as well as
- Between micro networks.
